# EUROPEAN PATENT SPECIFICATION

(11) **EP 3 538 253 B1**
(45) Date of publication and mention of the grant of the patent: **28.07.2021**
(21) Application number: 17869402.2
(22) Date of filing: 14.11.2017
(51) Int. Cl.: B01F 1/00, B01D 11/02, C02F 1/50, C02F 1/68, C02F 1/76, E04H 4/12, B01F 5/04, B01F 5/02, C02F 103/42

(54) **APPARATUS AND METHOD OF FORMING A CHEMICAL SOLUTION**
VORRICHTUNG UND VERFAHREN ZUR BILDUNG EINER CHEMISCHEN LÖSUNG
APPAREIL ET PROCÉDÉ DE FORMATION D'UNE SOLUTION CHIMIQUE

(30) Priority: 14.11.2016 US 201662421559 P
(43) Date of publication of application: 18.09.2019
(73) Proprietor: Innovative Water Care, LLC, Alpharetta, GA 30004 (US)
(72) Inventor: BLANCHETTE, David, Alpharetta Georgia 30004 (US); WEST, Enloe, Charleston Tennessee 37310 (US); TURNER, David, Lexington, KY 40515 (US)
(74) Representative: Barker Brettell LLP
(86) International application number: PCT/US2017/061517
(87) International publication number: WO 2018/089992

(56) References cited:
- US-A- 3 864 090
- US-A- 4 208 376
- US-A- 4 420 394
- US-A- 5 374 119
- US-A- 5 505 915
- US-A- 5 810 043
- US-A1- 2002 195 404
- US-A1- 2008 296 214
- US-A1- 2010 163 468
- US-A1- 2012 067 968
- US-A1- 2012 067 968
- US-A1- 2012 074 052
- US-A1- 2013 215 705
- US-A1- 2016 016 832
- US-B1- 8 251 080

## Description

### RELATED APPLICATIONS

The present application is based on and claims priority to US 20180133666 A1 which was filed on November 14, 2016.

### FIELD OF INVENTION

The present invention relates to an apparatus which forms a solution of a chemical in water, and the method of forming a chemical solution with the apparatus.

### BACKGROUND OF THE INVENTION

Apparatus for forming chemical solutions in water are known. In one particular are of use, apparatus for forming chemical solutions are used to form chemical solutions of water treatment chemicals. Some water treatment chemicals for pools, spas and the like, need to be added to water in relatively small amounts on a regular schedule. Most of the time, these chemicals are added manually by the pool owner or pool maintenance company. However, this can be time consuming and require the owner or maintenance company to be at poolside on a regular basis to add these chemicals to maintain the correct balance of chemicals in water.

Methods of adding pool chemicals such as dissolvable tablets, slow release formulations and the like can be used as well. But depending on flow rates, or lack of flow, of the pool or spa water, using these dissolvable tablets, slow release formulations and the like can result in too much or not enough of the water treatment chemical being added to the pool, spa or body of water being treated.

Water treatment apparatus can be in-line apparatus, in which the main water flow is caused to flow thru the apparatus or can be off-line apparatus. In-line apparatus often have high flow rates thru the apparatus and off-line apparatuses typically have low flow rates, generally 0.95 l (0.25 gallons) to about 11.36 l (3 gallons) per minute. However, with such low flow rates, getting enough flow over the slow dissolving chemicals to effectively dissolve the chemical to obtain a solution with sufficient chemical to accomplish the function of the chemical solution can be difficult. US2016/0016832 discloses a chemical feeder with a housing and installable cartridge as per the preamble of claims 1 and 10.

Accordingly, there is a need in the art for water treatment apparatus that can effectively dissolve slow dissolving chemicals in an effective manner using a relatively low flow of water thru the apparatus, by placing enough, but not too much chemical, in the water to be treated. The present invention provides an answer to that need.

### SUMMARY OF THE INVENTION

The present invention provides an apparatus for forming a water solution of a chemical from a solid chemical as per the subject-matter of claims 1 and 10. The apparatus is effective in dissolving a slow dissolving solid chemical in water using a relatively low flow rate.

In one embodiment of the present invention, provided is an apparatus having a housing with a top, a side, and a bottom. The top and the bottom are connected to one another by the side. The top, the side and the bottom form an interior compartment and the housing has an upper portion and a lower portion. In the housing is an inlet located in the lower portion of the housing. The inlet allows water to be contacted with the solid chemical entering the housing. The housing also has an outlet located in the upper portion of the housing. The outlet allows the water contacted with the solid chemical to exit the housing. Within the interior compartment of the housing is a nozzle. The nozzle is connected to the water inlet and the nozzle is located within the interior compartment of the housing in the lower portion of the housing. The nozzle allows water entering the housing thru the inlet to contact the solid chemical. Also present is at least one support located within the interior compartment of the housing positioned between the nozzle and top of the housing. The support is adapted to receive and position a cartridge containing the solid chemical within the interior compartment of the housing or to support a solid chemical in the housing.

The top of the housing has an opening which allows a cartridge containing a solid chemical, or a solid chemical to be inserted, into the housing. The apparatus also has a cap, where cap is adapted to cover the opening of the housing and to form a water tight connection with the top of the housing. The cap is removable from the housing to reveal the opening and to allow the solid chemical, or cartridge containing the solid chemical, to be inserted into the interior compartment of the housing.

In another embodiment of the present invention, the nozzle of the apparatus is an eductor. The eductor is positioned in the housing such that there is a flow of the water within the housing is directed towards the top of the housing from the eductor. The eductor has at least one fluid intake port that creates a venturi effect and allows water in the lower portion of the housing to be drawn into the eductor and sprayed towards the top of the housing.

The apparatus has a removable cartridge. This removable cartridge has a first end, a second end, and a sidewall connecting the first end to the second end. The first end, second end and sidewall form an internal chamber. The internal chamber contains a solid chemical, and the removable cartridge being adapted to fit into the interior compartment of the housing between the top of the housing and the at least one support located in the interior compartment of the housing. The removable cartridge may be inserted into the interior compartment thru said opening in the housing. The first end of the cartridge has a porous grid, and when the cartridge is positioned in the interior compartment of the housing, the cartridge being inserted in the housing such that the first end is positioned near the nozzle and the second end is positioned near the top of the housing. The porous grid has a first surface and an opposite second surface. The first surface comprises a plurality of projections, extending outward and away from the first surface and towards the inner chamber of the cartridge. The second surface of the porous grid faces away from the internal chamber of the cartridge. The plurality of projections extend in a generally perpendicular direction from the first surface. Further, the plurality of projections have a first end and a second end, the first end being located at the first surface of the porous grid and the second end is opposite the first end of the projections. The second end comprises a tapered end.

In a further embodiment, the at least one support is a series of supports, which allow a cartridge placed in the internal compartment of the housing to be positioned at different levels. The series of supports comprises a series of steps located on each side of the internal compartment, where each support has a complementary support within the internal compartment on the opposite side of the internal compartment.

In an additional embodiment, the cartridge has an adjustable length. The adjustable length is created by having a cartridge with two parts, including an upper part and a lower part. The upper part and the lower part are adjustably connected together with a connection means. The connection means maybe include a detent and a catch system. One of the upper part or the lower part has at least one detent, and the part without the detent has at least one catch. The catch of one part is adapted to receive the detent of the other part and the detent and catch join the upper part to the lower part to form the cartridge. The detent and the catch are such that they are releasable from each other.

In a particular embodiment, the upper part of the adjustable length cartridge has a first end, a second end and a side joining the first end of the upper part to the second end of the upper part, the first end of the upper part of having an opening, and the side of the upper part has the detent. The lower part of the adjustable length cartridge has first end, a second end and a side joining the first end of the lower part to the second end of the lower part, the second end of the lower part having an opening, and the side of the lower part has the at least one catch. The catch is adapted to receive the detent of the upper portion such that the first upper part and the second lower part are connected via the detent and catch. In a further embodiment, the second end of the lower part is sized and shaped to fit into the opening of the first end of the upper part such that an exterior surface of the side of the lower part contacts an interior surface of the side of the upper part. Further there are at least two detents on the interior surface of the side of the upper part and there are a plurality of catches located in the exterior surface of the lower part.

In a further embodiment, the apparatus may be a series of modules linked together. At least one additional module for forming a water solution from a solid chemical is provided. Each additional module of the apparatus has the same general structure as the apparatus described above. Each additional module has an additional housing, having a top, a side, and a bottom, where the top and the bottom are connected to one another by the side. The top, the side and the bottom form an additional interior compartment, and the additional housing has an upper portion and a lower portion. Further, there is an additional inlet located in the lower portion of the additional housing; the additional inlet allowing water to be contacted with the solid chemical to enter the additional housing. Also there is an additional outlet located in the upper portion of the additional housing; the additional outlet allowing the water contacted with the solid chemical to exit the additional housing. In addition, there is an additional nozzle disposed within the additional interior compartment. The additional nozzle is connected to the water additional inlet and said additional nozzle being located within the additional interior compartment of the additional housing in the lower portion of the additional housing, where the additional nozzle allows water entering the additional housing thru the additional inlet to contact the solid chemical in the additional internal compartment. The additional module further has at least one support located within the additional interior compartment positioned between the additional nozzle and the top of the additional housing. The support is adapted to receive and position a cartridge containing the solid chemical within the additional interior compartment of the additional housing or to support a solid chemical within the additional housing.

In an additional embodiment with the additional modules, the at least one additional water treatment module is in series with the first water treatment module, such that the inlet and the additional inlets are connected to a single water supply pipe and the outlet and the additional outlets are connected to the same return pipe. The water supply line is positioned to remove water at a place of having a first pressure and the water return line is position to return treated water at a place in the main line of flow having a second pressure which is lower than the first pressure.

In another embodiment, provided is a method of creating a chemical solution from a solid chemical using water as per the subject-matter of claim 11. The method includes placing the apparatus described above on a bypass line from a main water flow line, and flowing water from the main water flow thru the bypass line. The formed water solution is then returned to the main flow line

### BRIEF DESCRIPTION OF DRAWINGS

FIG. 1 shows an apparatus within the scope of the present disclosure.
FIG. 2 shows a nozzle useable in the apparatus.
FIG. 3 shows the support with step-like levels.
FIG. 4 shows the housing with a removable top.
FIG. 4A shows the housing with a removable top and a cartridge which is inserted into the housing.
FIG. 5 shows the cartridge with a solid chemical in the cartridge in the form of multiple solids.
FIG. 6 shows the cartridge with a solid chemical in the cartridge in the form of a unitary structure.
FIG. 7 shows a grid present on one end of the cartridge.
FIG. 8 shows an alternative grid with a plurality of projections
FIG. 9 shows an alternative cartridge with a grid with a plurality of projections.
FIG. 10 shows an expanded view of an adjustable cartridge useable in the present invention.
FIG. 10A shows an adjustable cartridge useable in the present invention in an extended configuration.
FIG. 10B shows an adjustable cartridge useable in the present invention in a shortened configuration.
FIG. 11 shows a cross-section of an adjustable cartridge place in the housing of the apparatus.
FIG. 12 shows a main line tap to achieve flow to the apparatus and a return to the main line.

### DETAILED DESCRIPTION OF THE PREFERRED EMBODIMENTS

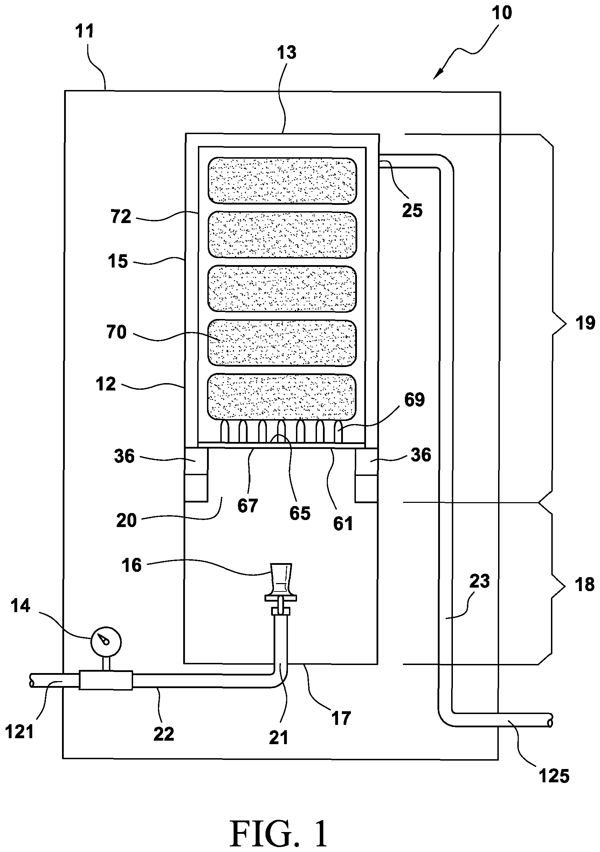

It has now been surprisingly found that the apparatus as described herein, is effective in administering a solid, slow dissolving chemical from the apparatus into water to form a chemical solution. The solution may be a water treating solution, such as for a swimming pool, a spa, or municipal water supply. Referring to FIG. 1, the apparatus 10 for administering a solid chemical to water to form a water solution of the solid chemical, has a housing 12, a top 13, a side 15, and a bottom 17 oppositely positioned from the top 13. As shown in FIG. 1, the top 13 and the bottom 17 are connected to one another by the side 15. The top 13, the side 15 and the bottom 17 form an interior compartment 20. The interior compartment 20 is designed to receive and hold a solid chemical 70. The side 15 may be a continuous surface, such as forming a cylindrical shape, or the side 15 may be a series on panels, forming a polygonal cross-sectional shape, e.g., a triangle, a square, a pentagon, rectangle, or a hexagon, just to name a few. The shape of the side 15 is not critical to the function of the apparatus, but the shape of the side may be used to designate the type of solid chemical that is to be inserted into the apparatus 10. This will be described in more detail below. Typically, from an ease of manufacture perspective, the side 15 will generally form a cylindrical shape. The apparatus 10 may also optionally have an outer shell 11, which protects the apparatus from damage during use or at the use locations and/or to incorporate all the features of the apparatus within a single unit. The outer shell 11 may optionally provide some aesthetics to the apparatus.

The interior compartment 20 has a lower portion 18 and an upper portion 19. The lower portion 18 is generally defined by the volume of the interior compartment below where the solid chemical is present. The upper portion 19 is generally defined by the volume of the interior compartment 20 where the solid chemical 70 is present.

The apparatus 10 also has an inlet 21 which is located is located in the lower portion 18 of the housing 12, preferably, at a position proximal to the bottom 17. The inlet 21 is an opening located in the housing which allows water to be contacted with the solid chemical to enter the housing 12 thru the bottom 17 (as shown in FIG. 1) or the side 15 (not shown), and allows the water to enter into the interior compartment 20. The inlet 21 will have an interior side located in the compartment 20 and an exterior side located on an outer surface of the housing 12. Also present is an outlet 25 located in the upper portion 19 of the housing 12. The outlet 25 allows the water contacted with the solid chemical, or solution, to exit the interior compartment 20 of the housing 12. Like the inlet 21, the outlet 25 has an interior side located in the compartment 20 and an exterior side, located on the outside of the housing. The outlet 25 may be located in the side 15 of the housing 12 at a position proximal to top 13, as shown in FIG. 1, or may exit the housing 12 thru the top 13 (not shown). The inlet is connected with a water supply line 22 and the outlet is connected to a treated water transporting line 23.

A water distribution device or nozzle 16 is connected to the water inlet 21 of the housing 12 on the interior side of the inlet 21. The water distribution device or nozzle 16 allows the water entering the housing 12 thru the inlet 21 to contact the solid chemical 70 which may be located cartridge 60, as shown in FIG. 1, or may be placed directly in the interior compartment 20 (not shown). An exemplary water distribution device or nozzle 16 includes a spray nozzle. Generally, the spray nozzle will generally spray or push a plume of water to be treated towards the upper portion 19 of the internal compartment 20 from the lower portion 18 of the internal compartment 20. Any spray nozzle may be used; however, given the intended solid chemical is a slow dissolving solid chemical, the nozzle should be selected to be one that will have sufficient flow to contact the solid chemical. One particular spray nozzle is an eductor, such as a tank mixing eductor.

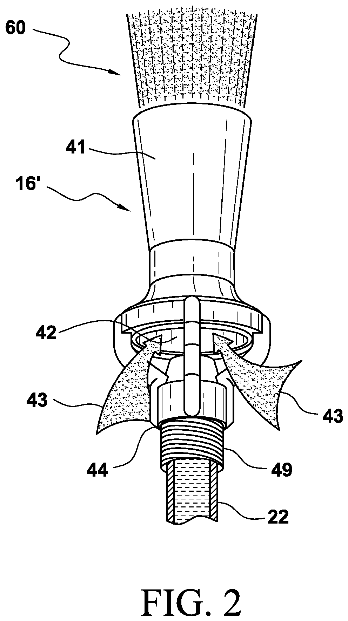

The nozzle 16 is mounted in the interior compartment 20 and discharges water entering thru the inlet 21 toward the solid chemical 70. In this embodiment, the nozzle 16 comprises an eductor 16' (shown in FIG 2), mounted vertically within the lower portion 18 of the interior compartment 20. In this manner, fluid exiting the eductor 16' is directed upward toward the solid chemical 70. As is shown in FIG 2, the eductor 16' has an inlet port 44 connecting to water supply line 22 through a coupler 49. Eductor 16' is configured to mix water from the feed line with chemical solution already formed in the feeder, drawing the solution through intake ports 42 that create a venturi effect. FIG. 2 illustrates details of eductor 16'. Suitable eductors include, for example, a "Tank Mixing Eductor" from Spraying Systems Co., Wheaton, III. The eductor 16' has an inlet port 44 that connects to water supply line 22, and a discharge port 41. The eductor 16' also has fluid intake ports 42 that create a venturi effect and thereby draw chemical solution back into the eductor 16', as shown schematically by arrows 43. This creates a discharge 60 from the eductor 16'. The discharge is a mixture of the chemical solution in the lower portion 18 of the internal

Referring back to FIG. 1, also connected to the inlet 21 on the exterior side is a first water supply pipe 22. The water supply pipe 22 may optionally have a flow meter 14 connected inline of the first water supply pipe 22, but before the inlet 21. The flow meter 14 may optionally have a check valve function as well. An example of a structure includes water flowing into a bottom of the flow meter and exiting the top of the flow meter. The outside of the flow meter has a gauge or scale that allow the interior of the meter to be seen. The interior has a float, generally a ball, that moved towards the exit of the flow meter. When no flow is thru the meter, the float or ball sits in a seat, which prevent water flowing backwards thru the meter, thereby creating a check valve. Optionally, the water supply line 22 may have a water supply valve or shut-off valve (not shown). The water supply valve, allows the water to be stopped from entering the apparatus, for example during maintenance of the apparatus, for example, reloading the solid chemical into the interior compartment 20 of the housing 12. Alternatively, the water supply valve may be used to or used to adjust the flow rate of water into the inlet 21 of the apparatus.

Connected to the outlet 25 is a treated water transporting line 23, which transports the water, treated with the solid treatment chemical (chemical solution), to the place of intended use. The treated water transporting pipe 23 may optionally have an outlet shut off valve located in the line 23. The outlet shut off valve (not shown), allows the water to be stopped from exiting the apparatus 10, for example, during maintenance of the apparatus, e.g., reloading the solid chemical. It also serves the purpose to isolate the apparatus from the body of water being treated with the solid chemical.

Also present in the apparatus is a support 36, located within the interior compartment 20 of the housing 12. The support 36 is adapted to an interior surface of the side 15 of the housing 12 at a position intermediate (i.e., between) the nozzle 16 and the top 13 of the housing 12. There may be one single support 36 or multiple supports at the same distance above the water distribution device (i.e., nozzle 16). The single support 36 may be a continuous support, meaning the support completes a loop on the interior surface. The support 36 serve to support and position the solid chemical above the water distribution device 16, so that the water distribution device may contact the water to be treated with the solid chemical. In a particular embodiment, the support 36 may serve to support and hold a cartridge 72, which is described in more detail below, in place within the interior compartment 20 of the housing. The cartridge 72 will contain the solid chemical 70 and position the solid chemical within the interior compartment 20 of the housing 12.

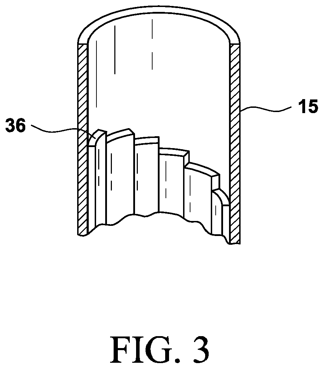

In one particular embodiment, the support 36 may be a series of supports at different levels. The series of support may be at different levels so that the cartridge 72, which holds the solid chemical 70 can be positioned closer or further away from the nozzle 16. Generally, if there are a series of supports 36 at different levels, there will be a complimentary support, set at the same height or position located directly across the internal compartment 20 on the interior surface of the side 15 or at a geometric position which will support the cartridge. Considering the interior surface of the side 15 being a circle, the complementary support will be in a geometric position if there are two supports 180 degrees apart, 3 supports located 120 degrees apart, 4 supports located at 90 degrees apart, and the like. In one particular embodiment, the series of supports 36 may be set up in a step-like fashion, as is shown in FIG. 3. In each case, there is at least one complementary support located in the interior compartment. In an alternative embodiment, the support 36 may be near the top of the housing 12, and support a cartridge 72 near the top of the cartridge, as will be explained in more detail below.

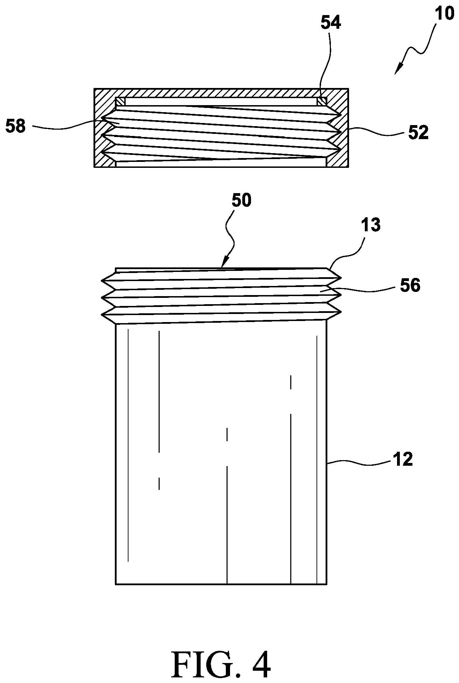

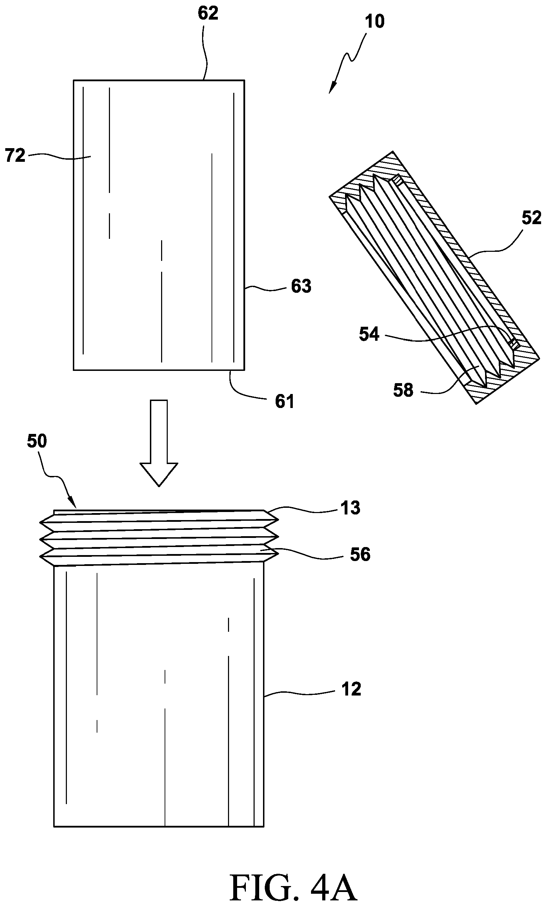

Referring to FIG. 4, the top 13 of the housing 12 further has an opening 50 and the apparatus 10 further has a cap 52 which is adapted to form a water tight connection with the top 13 of the housing 12. The cap 52 may be removable form the top 13 of the housing 12, which will allow the solid chemical to be inserted into the interior compartment 20 of the housing 12. Any suitable means may be used to create the water tight seal. An exemplary method includes having a seal 54 associated with the cap 52. In addition, as is shown in FIG. 4, the cap 52 may be threaded onto the top 13 of the housing. The top 13 of the housing is provided with threads 56 and the cap 52 has complementary threads 58 located on a portion of the cap 52 that contacts the top 13. The threads 56 may be conventional threads which requires the cap 52 to be turned one or more turns to attach the cap 52 to the top of the housing 12 or may be a bayonet threads, which allow the cap to be placed on on the top 13 of the housing 12 with a partial complete turn of the cap, such as a one-eight, one quarter, one half, or a three quarter turn of the cap 52. Of course, if a bayonet mount is used, the threads 58 on the cap 52 must be made to complement the threads 56 on the top 13 of the housing 12. It is noted that other means to secure the cap 52 to the top 13 may be used without departing from the scope of the present invention. For example, the top 13 may be attached to the housing 12, in a way the top 13 pivots into position and locks into place to create a water tight seal.

Referring to FIG. 4A, in the apparatus 10, the solid chemical is generally inserted into the interior compartment (not shown in FIG. 4) of the housing 12 thru the opening 50. The solid chemical may be the solid chemical itself, or the solid chemical may be located in a cartridge 72. The cartridge 72 being adapted to be inserted into the interior compartment of the housing 12 and the interior compartment of the housing 12 is adapted to receive the cartridge 72. The cartridge 72 is generally inserted thru opening 50 in the top 13 of the housing, as is shown in FIG. 4A.

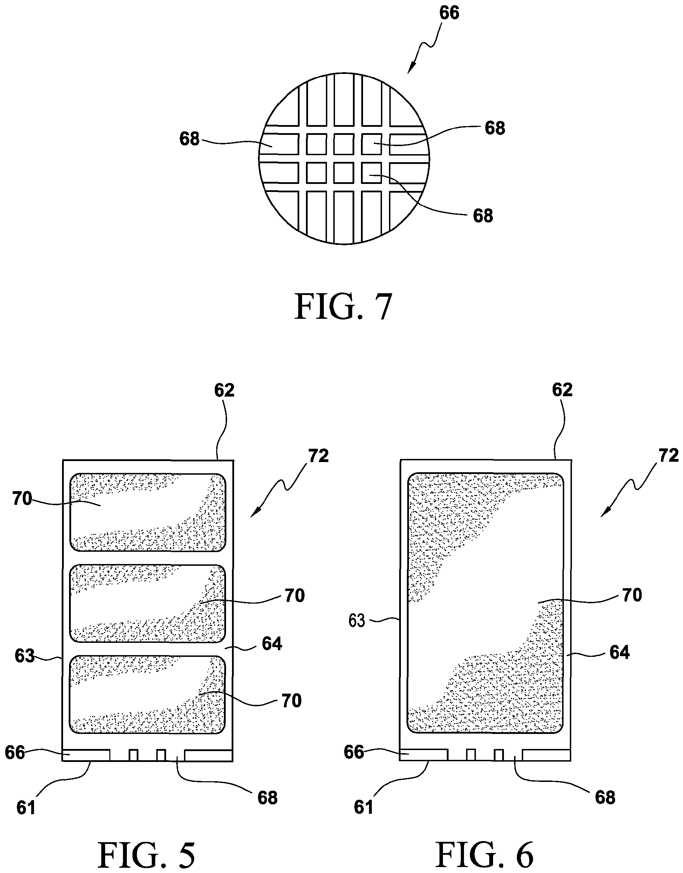

In one embodiment, referring to FIGS 4A, 5 and 6, the cartridge 72 will have a first end 61 and a second end 62 oppositely positioned from the first end 61. The cartridge 72 will also have a sidewall 63, which connects the first end 61 to the second end 62. The side wall 63, the first end 61 and the second end 62 form an internal chamber 64. The solid chemical 70 will be located or inserted in the internal chamber 64, as shown in FIG. 5 and FIG. 6. Typically, the first end 61 of the cartridge is placed into the housing 12, thru the opening 50 such that the first end 61 of the cartridge 72 is positioned near the nozzle 16. The first end 61 of the cartridge 72 may have a porous grid 66, shown in FIG. 7, having openings 68 in the grid. The openings 68 allow water emitted from the water nozzle 16 to go through the grid 66 and contact the solid chemical 70, in the internal chamber 64 of the cartridge. Typically, as is shown in FIGS. 5 and 6, the cartridge 72 will contain a solid chemical 70 in the internal compartment. As shown in FIG. 5, the solid chemical 70 may be several distinct solid articles. Alternatively, as shown in FIG. 6, the solid chemical 70 may be a unitary structure. The first end 61 of the cartridge may be covered with a cap, a film, a foil and the like, or a combination thereof, to protect the solid chemical during storage and shipping. The second end 62 may be closed or also covered a cap, a film, a foil and the like, or a combination thereof, to protect the solid chemical during storage and shipping. In one embodiment, the first end 61 may be covered with a water soluble film, which dissolves when water to be treated contacts the film from the water distribution device 16.

The grid 66 serves to hold the solid chemical 70 in the cartridge 72 so that the solid chemical does not directly contact the water distribution device 16. If a cartridge 72 holding the solid chemical is not used, a grid or other similar structure will be used to hold the solid chemical spaced apart from the water distribution device 16 in the interior compartment 20 of the housing 12. Generally, the support 36 could be a grid structure, if, a cartridge is not used. Alternatively, support 36 may be a grid structure even if a cartridge is used. In such a case, it would not be necessary to provide the cartridge with a grid.

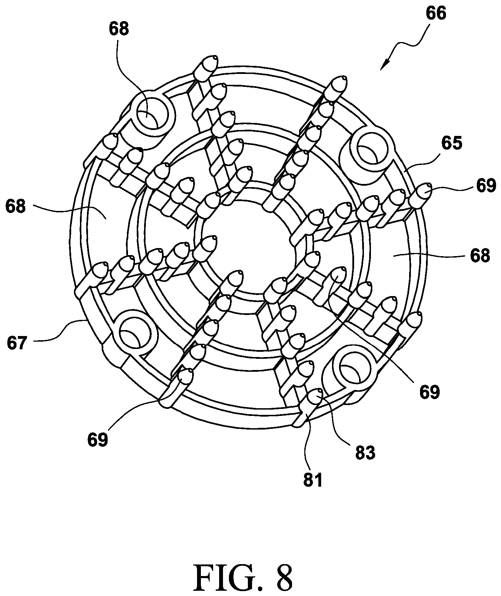

In a particular embodiment, the grid 66 may have a structure such as shown in FIG. 8. In this structure, the porous grid 66 has a first surface 65 and an opposite second surface 67. From the first surface 65, a plurality of projections 69 extend upward and away from the first surface 65 and towards the internal chamber 64 of the cartridge 72 and the second surface of the porous grid 66 faces away from the internal chamber 64 of the cartridge 72. This can also be seen in FIG. 1. Generally, the plurality of projections 69 extend in a generally perpendicular direction from the first surface 65 of the porous grid 66. In a particular embodiment, each of the projections 69 in the plurality of projections 69 has a first end 81 and a second end 83. The first end 81 being located at the first surface 65 of the porous grid 66 and the second end 83 is opposite the first end of the projections 69. As is shown in FIG. 8, the second end 83 of the projections 69 are tapered. The tapered projections 69, as shown in FIG. 8, form pencil-shaped pedestals which contact the tablet with minimal surface area. The small surface area supporting the chemical tablets allow for the flow 60 leaving the eductor 16 to better contact the solid chemical 70 in the apparatus, by minimalizing the surface area of the solid chemical in contact with the support. This will also allow the feed rate of the solid chemical to be increased because the tablet dissolves faster as compared when it is not supported by the projections.

The cartridge 72 is adapted to be placed into the internal compartment 20 of the housing 12 and the housing 12 is adapted to receive the cartridge. By "adapted", it is meant that the cartridge and internal compartment are sized and shaped to have the cartridge 72 to fit in the internal compartment 20 such that the cartridge will fit into and thru the opening 50 and the cap 52 can be positioned on the top 13 of the housing 12 to create a water tight seal. Generally, the shape of the cartridge 72 and the internal compartment 20 will be complementary, meaning they will each have a shape that allow proper placement of the cartridge 72 in the internal compartment 20.

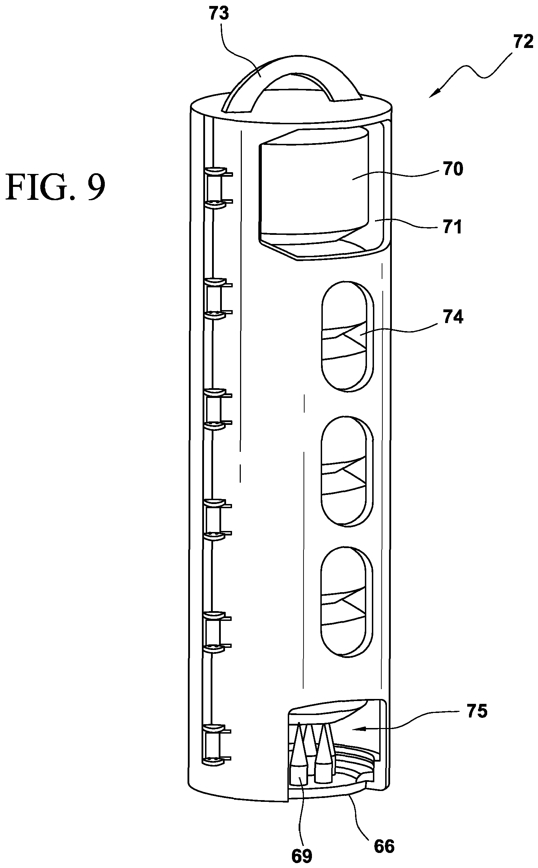

FIG. 9 illustrates particular embodiment of a cartridge 72 usable in the apparatus 10 according to this embodiment. The porous grid 66, (shown without openings 68), forms the bottom end of the cartridge 72, has projections 69 pointing upward into the interior chamber 64 of the cartridge 72. In this embodiment, porous grid 66 may be removable from the cartridge 72, since the projections 69 are subject to wear, and may be easily replaced by replacing the porous grid.

As shown in FIG. 9, the cartridge 72 has an opening 71 through which the water treatment tablets may be loaded. The size and shape of the opening 71 may be tailored so that the cartridge accepts only a specific type of tablet; this helps to ensure that an appropriate chemical product is used in the apparatus. The cartridge may also include handle 73 at its upper end 62. The sidewall 63 of the cartridge 72 has openings or slots 74, 75 therein. Openings 74 permit alignment of the water treating chemical 70 so that they are stacked uniformly in the cartridge 72. The openings 74 and 75 allow for the water contacting and treated with the water treating chemical 70 to exit the cartridge 72.

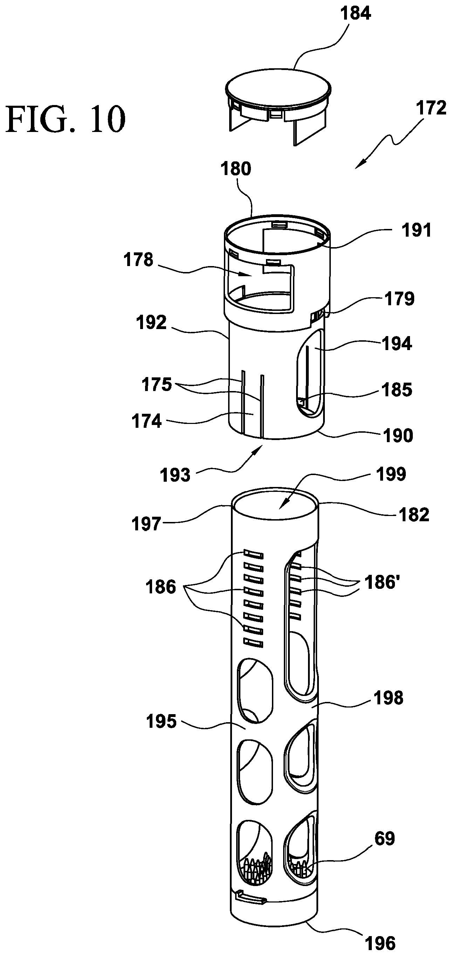

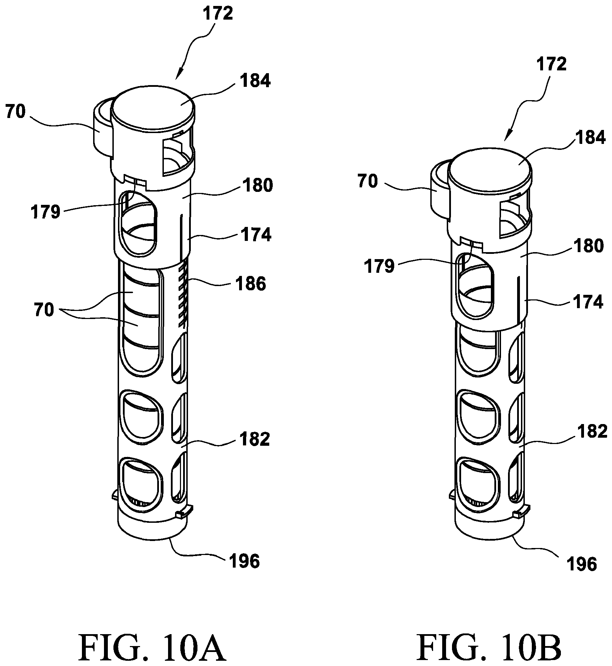

In a further embodiment of the present invention, the cartridge may be a cartridge 72 which may have an adjustable length, herein after referred to as "adjustable length cartridge". One example of this cartridge configuration which has an adjustable lenght is shown in FIGS 10, 10A and 10B. By having an adjustable length, the distance between the bottom of the cartridge 72 and the nozzle 16 can be adjusted. The further the chemical 70 is away from the cartridge, the slower the chemical 70 will dissolve. This will allow for the rate of dissolution of the chemical to be adjusted into a desired range. Another factor in the dissolution of the chemical is the rate in which the water enters the apparatus. Higher flow rates will increase the dissolution, while lower flow rates will have a slower dissolution rate. By having the adjustable cartridge, the rate of dissolution can be easily adjusted to the desired level in the water.

Referring to FIGS 10, 10A and 10B, one embodiment of the adjustable length cartridge 172 is shown. The adjustable length cartridge 172 has two parts comprising an upper part 180 and a lower part 182, and an optional cap 184. It is noted that the cap could be integrated into the upper part 180. The upper part 180 and the lower part have a connecting means to connect two parts together. Any suitable means may be used, so long as the upper part 180 and lower part 182 may be adjusted such that the length of the cartridge can be lengthened or shortened to desired length.

In one example, one of the upper part 180 or the lower part 182 has at least one detent 185 (shown on the upper part), and the part without the detent 185 has at least one catch 186. The catch 186 of one part is adapted to receive the detent 185 of the other part, such that the detent 185 and catch 186 join the upper part 180 to the lower part 182 to form the cartridge. Although the detent 185 is shown on the upper part 180, it should be understood that the detent 185 could in fact be located on the lower part 182, without departing from the spirit of the present invention. The detent 185 and catch 186 serve to attach the upper part 180 to the lower part 182.

In a particular embodiment, the upper part 180 has a first end 190, a second end 191 and a side 192 joining the first end 190 of the upper part 180 to the second end 191 of the upper part 180. The first end 190 of the upper part 180 has an opening 193. The side 192 has a detent 185. As shown in FIG 10, the detent is located on an inner surface 194 of the side 192. The lower part 182 has first end 196, a second end 197 and a side joining 198 the first end 196 of the lower part 182 to the second end 197 of the lower part 182. The second end 197 of the lower part 182 has an opening 199. The side 198 of the lower part 182 has the at least one catch 186. The at least one catch 186 of the lower part 182 is adapted to receive the detent 185 of the upper part 180, such that the upper part 180 and the lower part 182 are connected together via the detent 185 and catch 186 system.

The lower part 182 is sized and shaped to fit into the opening 193 of the upper part 180. The size and shape of both parts must be complementary to one another so that the detents 185 will engage the catches 186. This will serve to connect the the upper part 180 to the lower part 182, thereby forming the cartridge 182. Generally, size and shape of the lower part 182 will be circular, as shown in FIG 10, as is the upper part 180. When circular, opening 199 will have a smaller diameter than the opening 193 of the upper part 180. This will allow a portion of the side 198 of the lower part 182 to fit into or slide into the opening 193 of the upper part 180. As can be seen in FIG 10, an exterior surface 195 of the side 198 of the lower part 182 contacts an interior surface 194 of the side 192 of the upper part 180. Typically there are at least two detents 185 on the interior surface 194 of the side 192 of the upper part 182 and there are plurality of catches 186 located in the exterior surface 195 of the lower part 182.

Typically, there are two or more detents 185 on the upper part 180. There are more than one catch 186 located on the part with the catch 186 as is shown in FIG 10. Generally there are 2-12 catches 186 located on the part with the catch 186. The number of catches 186 can be adjusted to give the number of desired adjustments needed for the adjustable cartridge. The catches are shown to be in a vertical arrangement, however, it is noted that the catches could be offset from a vertical arrangement, without departing from the scope of the invention. As shown in FIG 10, there are 8 catches, but between 6 and 10 catches will typically be used. In addition, there will generally be two sets of catches 186' on opposite sides of side 198 of the lower portion. The catches 186 and 186' are positioned such that the detents 185 of the upper portion will engage the catches 186, 186' when the lower part 182 is positioned within the upper part 180.

The detent 185, shown on the interior surface 194 of the upper part 180 are generally protrusions from the interior surface 194. The catches 186 on the lower part 182 are generally recesses or openings in the side 198 of the lower part 182 that are sized and shaped to accept and engage the detent 185 of the upper part. In addition, the side 192 of the upper part has a portion 174 which is movable and will have a spring-like action, allowing the detent 185 to remain engaged with the catch 186 on the lower part. This spring-like action may be provided by cutting two slits 175 in side 192 which extend from the opening 193 upwards towards to the second surface. This will allow the portion 174 of the side 192 to move outwardly when the detent 185 engages the side 198 of the lower part 182 without the catches 186. As shown in FIG 10, there are two portions 174 which will have the spring-like action. There could be three, four or more portions 174. Alternatively, there could be a single portion 174 with spring-like action on the side 192.

The plurality of catches 186 are positioned along the exterior side 195 of the lower part 182 and are positioned near the second end 197 such that the catches 186 allow an overall length of the cartridge to be adjusted. Referring to FIG 10A, the top catch 186, or the catch closest to the opening 199 of the lower part 182 is engaged by the detent 185 creating a longer cartridge. This allows the first end 196 of the lower part 182 to be positioned closer to the nozzle when the cartridge 172 is positioned within the interior compartment 20 of the apparatus 10. Referring to FIG 10B, the top catch 186, or the catch furthest from the opening 199 of the lower part 182 is engaged by the detent 185 creating a shorter cartridge. In this configuration, the first end 196 of the lower part 182 to be positioned further away from the nozzle when the cartridge 172 is positioned within the interior compartment 20 of the apparatus 10.

As can be seen in FIG 10, the upper part 180 also has an opening 178 which will allow the solid chemical 70, shown as a tablet, to be loaded into the adjustable length cartridge 172. Loading of the adjustable length cartridge is shown in FIGS 10A and 10B. The cap 184 may be rotatable to allow the solid chemical to be inserted into the cartridge and rotated to close the opening to prevent the solid chemical from accidently being removed from the cartridge when the cartridge is being loaded into the housing.

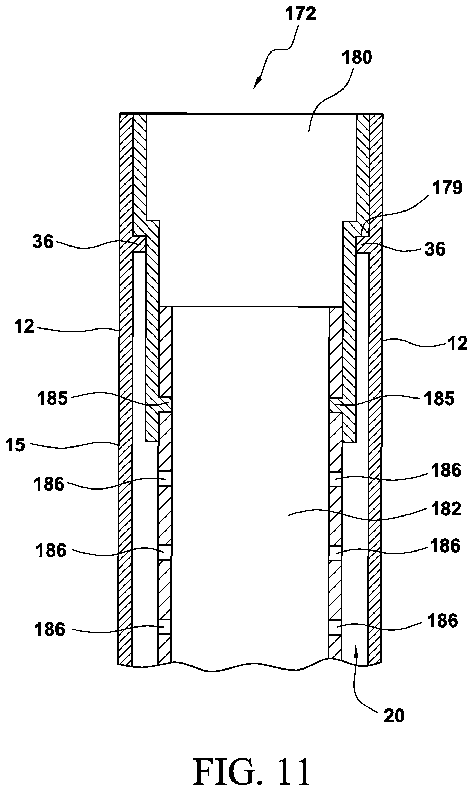

When the adjustable length cartridge 172 is used, the support 36, shown in FIG 1, will be positioned higher in the interior compartment 20 of the apparatus 10 in the upper portion 19 of the housing 12. To show this configuration, FIG 11 shows a partial cross-sectional view of the upper portion 19 of the housing 12, having the supports 36 extending from on interior surface of the side 15. The adjustable length cartridge 172 is shown positioned in the interior compartment 20 of the housing 12. The support engaging member 179, which is located somewhere on the cartridge. As shown in FIGS 10, 10A, 10B, and 11 the support engaging member 179 is located on the upper part 180 of the adjustable length cartridge 172. This will allow the adjustable length cartridge 172 to be positioned in the apparatus such that the lengthened cartridge of FIG 10A will have the lower

FIG 11 also shows the detent feature 185 engaging the catch 186. As shown, the detent 185 is a projection from the inner surface of the upper part 180 of the adjustable length cartridge 172. The catches 186 are shown as a hole in the lower part 182, which are sized and shaped to accept the detent 185 feature such the a force will need to be applied to the detent 185 feature to disengage the detent 185 feature from the catch 186. One such force include a rotational force with will cause the detent to contact the edges of the catch and force the detent 185 from our of the catch by causing the portion 174 of the side to move outwards, releasing the detent 185 from the catch. Alternatively, the portion 174, could be manipulated by a user by applying a force to the portion 174 to release the detent 185 from the catch.

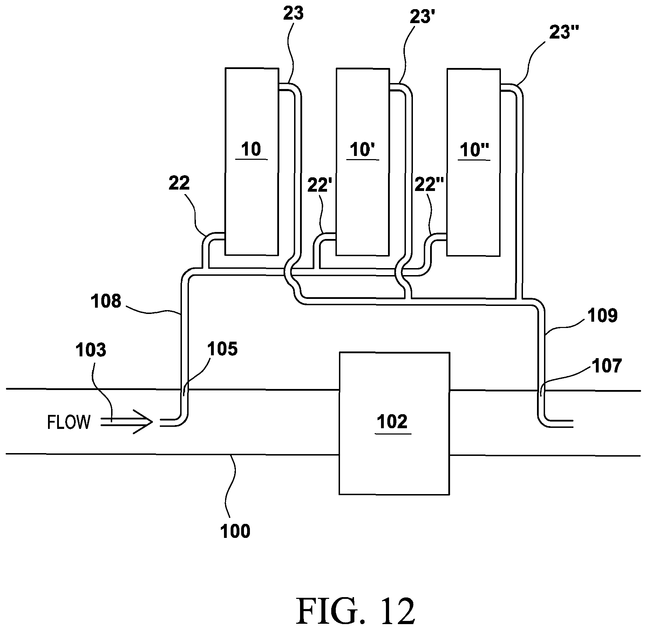

The apparatus 10 of the present disclosure is designed to be used as an off-line feeder, or a feeder that is placed on a by-pass loop off the main circulation line. To gain a better understanding of this, attention is directed to FIG. 12. As shown in FIG. 12, the main circulation line 100 has a direction of flow 103. In-line of the main circulation line is a device 102, which will create a pressure drop. The in-line device could be a filter, a valve, a heater or any other device that will create a pressure drop. The bypass line 108 is connected to the main line 100 using any known method. For example, a T-joint could be place in the main line or other methods such as saddle clamps could be used as well. An example of a suitable saddle clamps suitable for use in the present invention are described in US patent 7,329,343 to Barnes. The water for the bypass lines is drawn into the bypass line thru outlet 105 created in the main line 100. The water entering the bypass line enters the inlet line 22, which in turn the water enters the apparatus 10, as described above. Treated water is returned to the main line thru the return line 109, which is connected to treated water transporting line 23. The return line 109 is connected to the main line 100 thru inlet 107 in a similar fashion as it is removed from the main line 100. It is noted that the inlet 107 and outlet 105 do not need to be the same type of connection.

Flow in the bypass loop, lines 108 and 109 and thru the apparatus is created by the pressure drop in the main line 100. The flow in the bypass loop can be adjusted by the pressure drop in the main line or the size of the piping in the bypass loop. During operation, the apparatus 10 fills up with water. The flow rate into the apparatus is dependent on the size of the piping. But having the water entering the apparatus 10 thru an eductor 16', the flow rate within the apparatus in increased up to 2-4 times the flow rate entering or exiting the apparatus. This allows the water to be contacted onto the solid chemical at a rate higher than the flow rate into the apparatus 10. This is because the eductor 16' also has fluid intake ports 42 that create a venturi effect and thereby draw chemical solution back (the solution remaining in the interior compartment 20) into the eductor 16', as shown schematically by arrows 43 as describe above for FIG. 2. This increase in the flow rate within the interior compartment 20 allows the solid chemical to dissolve in an efficient manner, even if the flow rate entering and exit the apparatus is insufficient to dissolve the solid chemical.

Also provided by the present invention is a water treatment system which will have multiple apparatus described above. The second or subsequent apparatus may be positioned in series or in parallel with the first apparatus. Also as shown in FIG. 10, there can be multiple apparatus 10, 10' and 10" connected together. As is shown in FIG. 10, the apparatus 10, 10' and 10" are connected in parallel with one another. In such a case, the inlet 22 and the additional inlets 22' and 22" are connected to a single water supply pipe or bypass line 108 which is drawn from the main line 100. Likewise, the outlet 23 and the additional outlets 23' and 23' are connected to the same return line 109 to return the treated water to the main supply line 100. It is desirable to use multiple apparatuses 10, 10' and 10" if a larger quantity of water needs to be treated. When multiple apparatuses are used, the water supply pipe 108 and the return line 109 will need to be of a larger diameter to handle the increase in water needed to operate the apparatuses. As is shown in FIG. 12, there are 3 separate apparatuses. However, the number of apparatuses used, when multiple apparatuses are used, is generally in the 2-10 range.

The solid chemical usable in the apparatus of the present invention will typically be a solid water treating chemical, such as a disinfectant, an algaecide or other water treating chemical commonly used in pools and spas. The solid chemical may be a bromine releasing chemical, a chlorine releasing chemical, a peroxide releasing chemical, a biguanide releasing chemical and the like. The solid chemical may be a sanitizer, an algaecide, a clarifier, a pH adjustment, a water balancer. One particular water treatment chemical is calcium hypochlorite, in a slow dissolving form, such as one having a high lime content. This is slow dissolving calcium hypochlorite is described in US Patent Application Publication 2016/0330972 A1.

The apparatus 10 of the present invention may be used to treat water which is present in a recirculating body of water, such as a swimming pool or spa, on an industrial body of water. Generally, the water being from the recirculated body of water is drawn through a pump in a recirculating line and the pipes 24 and 26 are connected on to the recirculating line.

In addition, the apparatus of the present invention may be used in conjunction with other water treatment devices, such as liquid chemical dispensing device, a chlorine generating device, an active hydroxyl generating device, an ozone generating device, an ultraviolet light device and the like. The additional devices may be separate units or built into a single unit. These additional devices may be in parallel or in series with the apparatus of the present invention.

## Claims

1. An apparatus (10) for forming a water solution of a chemical from a solid chemical (70), the apparatus comprising:
(i) a housing (12), having a top (13), a side (15), and a bottom (17), where the top (12) and the bottom (17) are connected to one another by the side (15), said top (13), said side (15) and said bottom (17) form an interior compartment (20), and the housing (12) having an upper portion (19) and a lower portion (18);
(ii) an inlet (21) located in the lower portion (18) of the housing (12), the inlet (21) allowing water to be contacted with the solid chemical (70) to enter the housing (12);
(iii) an outlet (25) located in the upper portion (19) of the housing (12), the outlet (25) allowing the water contacted with the solid chemical (70) to exit the housing (12);
(iv) a nozzle (16) disposed within the interior compartment (20), said nozzle (16) is connected to the water inlet (21) and said nozzle (16) being located within the interior compartment (20) of the housing (12) in the lower portion (18) of the housing (12), wherein the nozzle (16) allows water entering the housing (12) through the inlet (21) to contact the solid chemical (70); and
(v) at least one support (36) located within the interior compartment (20) positioned between the nozzle (16) and the top (13) of the housing (12), said support (36) being adapted to receive and position a cartridge (72) containing the solid chemical (70) within the interior compartment (20) of the housing (12);
wherein the top (13) of the housing (12) comprises an opening (50) which allows a cartridge (72) containing the solid chemical (70) to be inserted into the housing (12), and the apparatus further comprises a cap (52), said cap (52) being adapted to cover the opening (50) of the housing (12) and to form a water tight connection with the top (13) of the housing (12);
the apparatus **characterized in that** the
apparatus (10) further comprises a removable cartridge (72) containing the solid chemical (70), said cartridge (72) having a first end (61), a second end (62), and a sidewall (63) connecting the first end (61) to the second end (62), wherein the first end (61), second end (62) and sidewall (63) form an internal chamber (64), said internal chamber (64) containing the solid chemical (70), and the cartridge (72) being adapted to fit into the interior compartment (20) of the housing (12) between the top (13) of the housing (12) and the nozzle (16), wherein the cartridge (72) contacts the at least one support (36) located in the interior compartment (20) of the housing (12) and the at least one support (36) positions the cartridge (72) containing the solid chemical (70) within the interior compartment (20) of the housing (12), and such that the cartridge (72) may be inserted into the interior compartment (20) through said opening (50) in the housing (12); and
wherein the first end (61) of the cartridge comprises a porous grid (66), and when the cartridge (72) is positioned in the interior compartment (20) of the housing (12), the cartridge (72) being inserted in the housing (12) such that the first end (61) is positioned near the nozzle (16) and the second end (62) is positioned near the top (13) of the housing (12).

2. The apparatus (10) according to claim 1, wherein the cap (52) is removable from the housing (12) to reveal the opening (50) and to allow the removable cartridge (72) containing the solid chemical (70) to be inserted into the interior compartment (20) of the housing (12); and/or
wherein the nozzle (16) comprises an educator (16'); and, optionally or preferably, wherein the educator (16') is positioned in the housing (12) such that there is a flow of the water within the housing (12) towards the top (13) of the housing (12) from the educator (16'), and further optionally or preferably wherein the educator (16') comprises at least one fluid intake port (42) which creates a venturi effect and allows water in the lower portion (18) of the housing (12) to be drawn into the educator (16') with the water entering the educator (16') through the inlet (21) and to be sprayed towards the top (13) of the housing (12).

3. The apparatus (10) according to claim 1, wherein the porous grid (66) has a first surface (65) and an opposite second surface (67), the first surface (65) comprising a plurality of projections (69), extending outward and away from the first surface (65) and towards the inner chamber (64) of the cartridge (72), and the second surface (67) of the porous grid (66) faces away from the internal chamber (64) of the removable cartridge (72); and, optionally or preferably,
wherein the plurality of projections (69) extend in a generally perpendicular direction from the first surface (65), and optionally or preferably, wherein the plurality of projections (69) have a first end (81) and a second end (83), the first end (81) of the projections (69) being located at the first surface (65) of the porous grid (66) and the second end (67) of the projections (69) is opposite the first end (81) of the projections (69), the second end (67) of the projections (69) comprising a tapered end.

4. The apparatus (10) according to claim 1, wherein the at least one support (36) comprises a series of supports, which allow a cartridge (72) placed in the internal compartment (20) of the housing (12) to be positioned at different levels,
wherein the series of supports (36) comprises a series of steps located on each side (15) of the internal compartment (20), where each support (36) has a complimentary support within the internal compartment (20) on the opposite side (15) of the internal compartment (20).

5. The apparatus (10) according to claim 1, wherein the cartridge (172) has two parts comprising an upper part (180) and a lower part (182), wherein the upper part (180) and the lower part (182) are adjustably connected together with a connection means.

6. The apparatus (10) according to claim 5, wherein the connection means comprises a detent (185) and a catch (186), wherein one of the upper part (180) or the lower part (182) has at least one detent (185), and the part without the detent has at least one catch (186), and wherein the catch (186) of one part is adapted to receive the detent (185) of the other part wherein the detent (185) and catch (186) join the upper part (180) to the lower part (182) to form the cartridge.

7. The apparatus (10) according to claim 6, wherein
the upper part (180) has a first end (190), a second end (191) and a side (192) joining the first end (190) of the upper part (180) to the second end (191) of the upper part (180), the first end (190) of the upper part (180) having an opening (193), and the side (192) of the upper part (180) has the detent (185), and the lower part (182) has a first end (196), a second end (197) and a side (198) joining the first end (196) of the lower part (182) to the second end (197) of the lower part (182), the second end (197) of the lower part (182) having an opening (199), wherein the side (198) of the lower part (182) has the at least one catch (186), wherein the catch (186) is adapted to receive the detent (185) of the upper portion (180) such that the first upper part (180) and the second lower part (182) are connected via the detent (185) and catch (186), and optionally or preferably,
wherein the second end (197) of the lower part (182) is sized and shaped to fit into the opening (193) of the first end (190) of the upper part (180) such that an exterior surface (195) of the side (198) of the lower part (182) contacts an interior surface (194) of the side (192) of the upper part (180), and wherein there are at least two detents (183) on the interior surface (194) of the side (192) of the upper part (182) and there are plurality of catches (186) located in the exterior surface (195) of the lower part (182); and further optionally or preferably, wherein the plurality of catches (186) are positioned along the exterior side (195) of the lower part (182) positioned near the second end (197) of the lower part (182) such that the catches (186) allow an overall length of the cartridge (172) to be adjusted, allowing the first end (196) of the lower part (182) to be positioned closer or further away from the nozzle (16) when the cartridge (172) is positioned within the interior compartment (20) of the apparatus (10).

8. The apparatus (10) according to claim 1, further comprising at least one additional module (10') for forming a water solution from a solid chemical (70), each additional module comprising:
a) an additional housing (12'), having a top (13), a side (15), and a bottom (17), where the top (12) and the bottom (17) are connected to one another by the side (15), said top (13), said side (15) and said bottom (17) form an additional interior compartment (20'), and the additional housing (12') having an upper portion (19) and a lower portion (18);
b) an additional inlet (21') located in the lower portion (18) of the additional housing (12'), the additional inlet (21') allowing water to be contacted with the solid chemical (70) to enter the additional housing (12');
c) an additional outlet (25') located in the upper portion (19) of the additional housing (12'), the additional outlet (25') allowing the water contacted with the solid chemical (70) to exit the additional housing (12');
d) an additional nozzle (16') disposed within the additional interior compartment (20'), said additional nozzle (16') being connected to the additional water inlet (21') and said additional nozzle (16') being located within the additional interior compartment (20') of the additional housing (12') in the lower portion (18) of the additional housing (12'), wherein the additional nozzle (16') allows water entering the additional housing (12') through the additional inlet (21') to contact the solid chemical (70) in the additional internal compartment (20');
e) at least one support (36) located within the additional interior compartment (20') positioned between the additional nozzle (16') and the top (13) of the additional housing (12'), said support (36) being adapted to receive and position a cartridge (72) containing the solid chemical (70) within the additional interior compartment (20') of the additional housing (12'); and
optionally or preferably, wherein at least one additional water treatment module (10') is in series with a first water treatment module (10), such that the inlet (21) and the additional inlets (21') are connected to a single water supply pipe (108) and the outlet (25) and the additional outlets (25') are connected to the same return pipe (109).

9. The apparatus (10) according to claim 1, further comprising a water supply line (22) and a water return line (23), the water supply line (22) and the water return line (23) forming a bypass line of a main line (100) of flow, the water supply line (22) being positioned to remove water at a place of flow having a first pressure and the water return line (23) is position to return treated water at a place in the main line (100) of flow having a second pressure which is lower than the first pressure; and/or
wherein the porous grid (66) has a first surface (65) and an opposite second surface (67), the first surface (65) comprising a plurality of projections (69), extending upward and away from the first surface (65) and towards the inner chamber (65) of the cartridge (72) and the second surface (67) of the porous grid (66) faces away from the internal chamber (64) of the removable cartridge (72).

10. An apparatus (10) for forming a water solution of a chemical from a solid chemical (70), the apparatus (10) comprising:
(i) a housing (12), having a top (13), a side (15), and a bottom (17), where the top (12) and the bottom (17) are connected to one another by the side (15), said top (13), said side (15) and said bottom (17) form an interior compartment (20), and the housing (12) having an upper portion (19) and a lower portion (18);
(ii) an inlet (21) located in the lower portion (18) of the housing (12), the inlet (21) allowing water to be contacted with the solid chemical (70) to enter the housing (12);
(iii) an outlet (25) located in the upper portion (19) of the housing (12), the outlet (25) allowing the water contacted with the solid chemical (70) to exit the housing (12);
(iv) a nozzle (16) disposed within the interior compartment (20), said nozzle (16) being connected to the water inlet (21) and said nozzle (16) being located within the interior compartment (20) of the housing (12) in the lower portion (18) of the housing (12), wherein the nozzle (16) allows water entering the housing (12) through the inlet (21) to contact the solid chemical (70); and
(v) at least one support (36) located within the interior compartment (20) positioned between the nozzle (16) and the top (13) of the housing (12), said support (36) being adapted to receive and position a cartridge (72) containing the solid chemical (70) within the interior compartment (20) of the housing (12);
wherein the top (13) of the housing (12) comprises an opening (50) which allows a cartridge (72) containing the solid chemical (70) to be inserted into the housing (12), and the apparatus further comprises a cap (52), said cap (52) being adapted to cover the opening (50) of the housing (12) and to form a water tight connection with the top (13) of the housing (12); the apparatus **characterized in that** the
apparatus (10) further comprises a removable cartridge (72) containing the solid chemical (70), said cartridge (72) having a first end (61), a second end (62), and a sidewall (63) connecting the first end (61) to the second end (62), wherein the first end (61), second end (62) and sidewall (63) form an internal chamber (64), said internal chamber (64) containing the solid chemical (70), and the cartridge (72) being adapted to fit into the interior compartment (20) of the housing (12) between the top (13) of the housing (12) and the nozzle (16), wherein the cartridge (72) contacts the at least one support (36) located in the interior compartment (20) of the housing (12), and the at least one support (36) positions the cartridge (72) containing the solid chemical (70) within the interior compartment (20) of the housing (12), and such that the cartridge (72) may be inserted into the interior compartment (20) through an opening (50) in the top (13) of the housing (12); and
wherein the support (36) comprises a porous grid (66), the porous grid (66) having a first surface (65) and an opposite second surface (67), the first surface (65) comprising a plurality of projections (69), extending upward and away from the first surface (65).

11. A method of creating a chemical solution from a solid chemical (70) using water, comprising placing the apparatus (10) according to claim 1 or 10 on a bypass line (108) from a main water flow line (100), and flowing water from the main water flow (100) through the bypass line (109), and returning the chemical solution to the main water flow line (100).

## Patentansprüche

1. Vorrichtung (10) zum Bilden einer Wasserlösung einer Chemikalie aus einer festen Chemikalie (70), wobei die Vorrichtung umfasst:
(i) ein Gehäuse (12) mit einem Oberteil (13), einer Seite (15) und einem Unterteil (17), wobei das Oberteil (12) und das Unterteil (17) durch die Seite (15) miteinander verbunden sind, das Oberteil (13), die Seite (15) und das Unterteil (17) einen Innenraum (20) bilden und das Gehäuse (12) einen oberen Abschnitt (19) und einen unteren Abschnitt (18) aufweist;
(ii) einen Einlass (21), der sich in dem unteren Abschnitt (18) des Gehäuses (12) befindet, wobei der Einlass (21) ermöglicht, dass Wasser, das mit der festen Chemikalie (70) in Kontakt kommen soll, in das Gehäuse (12) eintritt;
(iii) einen Auslass (25), der sich im oberen Abschnitt (19) des Gehäuses (12) befindet, wobei der Auslass (25) dem mit der festen Chemikalie (70) in Kontakt gebrachten Wasser ermöglicht, aus dem Gehäuse (12) auszutreten;
(iv) eine Düse (16), die innerhalb des Innenraums (20) angeordnet ist, wobei die Düse (16) mit dem Wassereinlass (21) verbunden ist und sich die Düse (16) in dem Innenraum (20) des Gehäuses (12) in dem unteren Abschnitt (18) des Gehäuses (12) befindet, wobei die Düse (16) ermöglicht, dass das durch den Einlass (21) in das Gehäuse (12) eintretende Wasser mit der festen Chemikalie (70) in Kontakt kommt; und
(v) mindestens eine Abstützung (36), die sich innerhalb des Innenraums (20) befindet und zwischen der Düse (16) und dem Oberteil (13) des Gehäuses (12) angeordnet ist, wobei die Abstützung (36) dazu ausgelegt ist, eine Patrone (72), die die feste Chemikalie (70) enthält, innerhalb des Innenraums (20) des Gehäuses (12) aufzunehmen und zu positionieren;
wobei das Oberteil (13) des Gehäuses (12) eine Öffnung (50) umfasst, die es ermöglicht, eine Patrone (72), die die feste Chemikalie (70) enthält, in das Gehäuse (12) einzuführen, und die Vorrichtung ferner eine Kappe (52) aufweist, wobei die Kappe (52) dazu ausgelegt ist, die Öffnung (50) des Gehäuses (12) abzudecken und eine wasserdichte Verbindung mit dem Oberteil (13) des Gehäuses (12) zu bilden;
wobei die Vorrichtung **dadurch gekennzeichnet ist, dass** die
Vorrichtung (10) ferner eine herausnehmbare Patrone (72) umfasst, die die feste Chemikalie (70) enthält, wobei die Patrone (72) ein erstes Ende (61), ein zweites Ende (62) und eine Seitenwand (63), die das erste Ende (61) mit dem zweiten Ende (62) verbindet, aufweist, wobei das erste Ende (61), das zweite Ende (62) und die Seitenwand (63) eine innere Kammer (64) bilden, wobei die innere Kammer (64) die feste Chemikalie (70) enthält und die Patrone (72) so ausgelegt ist, dass sie in den Innenraum (20) des Gehäuses (12) zwischen dem Oberteil (13) des Gehäuses (12) und der Düse (16) passt, wobei die Patrone (72) mit der mindestens einen Abstützung (36) in Kontakt kommt, die sich in dem Innenraum (20) des Gehäuses (12) befindet, und die mindestens eine Abstützung (36) die Patrone (72), die die feste Chemikalie (70) enthält, innerhalb des Innenraums (20) des Gehäuses (12) derart positioniert, dass die Patrone (72) durch die Öffnung (50) in dem Gehäuse (12) in den Innenraum (20) eingesetzt werden kann; und
wobei das erste Ende (61) der Patrone ein poröses Gitter (66) umfasst, und wenn die Patrone (72) in dem Innenraum (20) des Gehäuses (12) positioniert ist, die Patrone (72) so in das Gehäuse (12) eingesetzt ist, dass das erste Ende (61) nahe der Düse (16) positioniert ist und das zweite Ende (62) nahe dem Oberteil (13) des Gehäuses (12) positioniert ist.

2. Vorrichtung (10) nach Anspruch 1, wobei die Kappe (52) von dem Gehäuse (12) abnehmbar ist, um die Öffnung (50) freizulegen und um zu ermöglichen, dass die herausnehmbare Patrone (72), die die feste Chemikalie (70) enthält, in den Innenraum (20) des Gehäuses (12) eingesetzt werden kann; und/oder
wobei die Düse (16) einen Ejektor (16') aufweist; und, optional oder bevorzugt, wobei der Ejektor (16') in dem Gehäuse (12) derart positioniert ist, dass ein Durchfluss des Wassers innerhalb des Gehäuses (12) in Richtung des Oberteils (13) des Gehäuses (12) aus dem Ejektor (16') vorhanden ist, und ferner optional oder bevorzugt, wobei der Ejektor (16') mindestens eine Fluidansaugöffnung (42) umfasst, die einen Venturi-Effekt erzeugt und ermöglicht, dass Wasser in dem unteren Abschnitt (18) des Gehäuses (12) in den Ejektor (16') gesaugt wird, wobei das Wasser durch den Einlass (21) in den Ejektor (16') eintritt und in Richtung des Oberteils (13) des Gehäuses (12) gesprüht wird.

3. Vorrichtung (10) nach Anspruch 1, wobei das poröse Gitter (66) eine erste Oberfläche (65) und eine gegenüberliegende zweite Oberfläche (67) aufweist, wobei die erste Oberfläche (65) eine Mehrzahl von Vorsprüngen (69) umfasst, die sich nach außen und von der ersten Oberfläche (65) weg und in Richtung der inneren Kammer (64) der Patrone (72) erstrecken, und die zweite Oberfläche (67) des porösen Gitters (66) von der inneren Kammer (64) der herausnehmbaren Patrone (72) weg weist; und, optional oder bevorzugt,
wobei sich die Mehrzahl von Vorsprüngen (69) in einer im Allgemeinen senkrechten Richtung von der ersten Oberfläche (65) aus erstreckt, und optional oder bevorzugt, wobei die Mehrzahl von Vorsprüngen (69) ein erstes Ende (81) und ein zweites Ende (83) aufweist, wobei sich das erste Ende (81) der Vorsprünge (69) an der ersten Oberfläche (65) des porösen Gitters (66) befindet und das zweite Ende (67) der Vorsprünge (69) dem ersten Ende (81) der Vorsprünge (69) gegenüberliegt, wobei das zweite Ende (67) der Vorsprünge (69) ein sich verjüngendes Ende aufweist.

4. Vorrichtung (10) nach Anspruch 1, wobei die mindestens eine Abstützung (36) eine Reihe von Abstützungen umfasst, die es ermöglichen, eine in das Innenfach (20) des Gehäuses (12) eingesetzte Patrone (72) auf verschiedenen Ebenen zu positionieren,
wobei die Reihe von Abstützungen (36) eine Reihe von Stufen umfasst, die sich auf jeder Seite (15) des Innenraums (20) befinden, wobei jede Abstützung (36) eine komplementäre Abstützung innerhalb des Innenraums (20) auf der gegenüberliegenden Seite (15) des Innenraums (20) aufweist.

5. Vorrichtung (10) nach Anspruch 1, wobei die Patrone (172) zwei Teile aufweist, die ein oberes Teil (180) und ein unteres Teil (182) umfassen, wobei das obere Teil (180) und das untere Teil (182) mit einem Verbindungsmittel einstellbar miteinander verbunden sind.

6. Vorrichtung (10) nach Anspruch 5, wobei das Verbindungsmittel eine Rastnase (185) und eine Arretierung (186) umfasst, wobei eines von dem oberen Teil (180) oder dem unteren Teil (182) mindestens eine Rastnase (185) aufweist und das Teil ohne die Rastnase mindestens eine Arretierung (186) aufweist, und wobei die Arretierung (186) des einen Teils dazu ausgelegt ist, die Rastnase (185) des anderen Teils aufzunehmen, wobei die Rastnase (185) und die Arretierung (186) das obere Teil (180) mit dem unteren Teil (182) verbinden, um die Patrone zu bilden.

7. Vorrichtung (10) nach Anspruch 6, wobei
das obere Teil (180) ein erstes Ende (190), ein zweites Ende (191) und eine Seite (192), die das erste Ende (190) des oberen Teils (180) mit dem zweiten Ende (191) des oberen Teils (180) verbindet, aufweist, wobei das erste Ende (190) des oberen Teils (180) eine Öffnung (193) aufweist, und die Seite (192) des oberen Teils (180) die Rastnase (185) aufweist, und das untere Teil (182) ein erstes Ende (196), ein zweites Ende (197) und eine Seite (198), die das erste Ende (196) des unteren Teils (182) mit dem zweiten Ende (197) des unteren Teils (182) verbindet, aufweist, wobei das zweite Ende (197) des unteren Teils (182) eine Öffnung (199) aufweist, wobei die Seite (198) des unteren Teils (182) die mindestens eine Arretierung (186) aufweist, wobei die Arretierung (186) dazu ausgelegt ist, die Rastnase (185) des oberen Teils (180) derart aufzunehmen, dass das erste obere Teil (180) und das zweite untere Teil (182) über die Rastnase (185) und die Arretierung (186) verbunden sind, und optional oder bevorzugt,
wobei das zweite Ende (197) des unteren Teils (182) so bemessen und geformt ist, dass es in die Öffnung (193) des ersten Endes (190) des oberen Teils (180) derart passt, dass eine Außenfläche (195) der Seite (198) des unteren Teils (182) eine Innenfläche (194) der Seite (192) des oberen Teils (180) berührt, und wobei sich an der Innenfläche (194) der Seite (192) des oberen Teils (182) mindestens zwei Rastnasen (183) befinden und sich in der Außenfläche (195) des unteren Teils (182) eine Mehrzahl von Arretierungen (186) befindet; und ferner optional oder bevorzugt, wobei die Mehrzahl von Arretierungen (186) entlang der Außenseite (195) des unteren Teils (182) in der Nähe des zweiten Endes (197) des unteren Teils (182) derart positioniert sind, dass die Arretierungen (186) es ermöglichen, dass eine Gesamtlänge der Patrone (172) eingestellt werden kann, wodurch ermöglicht wird, dass das erste Ende (196) des unteren Teils (182) näher oder weiter weg von der Düse (16) positioniert werden kann, wenn die Patrone (172) innerhalb des Innenraums (20) der Vorrichtung (10) positioniert ist.

8. Vorrichtung (10) nach Anspruch 1, ferner umfassend mindestens ein zusätzliches Modul (10') zur Bildung einer Wasserlösung aus einer festen Chemikalie (70), wobei jedes zusätzliche Modul umfasst:
a) ein zusätzliches Gehäuse (12') mit einem Oberteil (13), einer Seite (15) und einem Unterteil (17), wobei das Oberteil (12) und das Unterteil (17) durch die Seite (15) miteinander verbunden sind, das Oberteil (13), die Seite (15) und das Unterteil (17) einen zusätzlichen Innenraum (20') bilden und das zusätzliche Gehäuse (12') einen oberen Abschnitt (19) und einen unteren Abschnitt (18) aufweist;
b) einen zusätzlichen Einlass (21'), der sich in dem unteren Abschnitt (18) des zusätzlichen Gehäuses (12') befindet, wobei der zusätzliche Einlass (21') ermöglicht, dass Wasser, das mit der festen Chemikalie (70) in Kontakt kommen soll, in das zusätzliche Gehäuse (12') eintritt;
c) einen zusätzlichen Auslass (25'), der sich im oberen Abschnitt (19) des zusätzlichen Gehäuses (12') befindet, wobei der zusätzliche Auslass (25') dem mit der festen Chemikalie (70) in Kontakt gebrachten Wasser ermöglicht, aus dem zusätzlichen Gehäuse (12') auszutreten;
d) eine zusätzliche Düse (16'), die innerhalb des zusätzlichen Innenraums (20') angeordnet ist, wobei die zusätzliche Düse (16') mit dem zusätzlichen Wassereinlass (21') verbunden ist und sich die zusätzliche Düse (16') innerhalb des zusätzlichen Innenraums (20') des zusätzlichen Gehäuses (12') in dem unteren Abschnitt (18) des zusätzlichen Gehäuses (12') befindet, wobei die zusätzliche Düse (16') ermöglicht, dass das durch den zusätzlichen Einlass (21') in das zusätzliche Gehäuse (12') eintretende Wasser mit der festen Chemikalie (70) in dem zusätzlichen Innenraum (20') in Kontakt kommt; und
e) mindestens eine Abstützung (36), die sich innerhalb des zusätzlichen Innenraums (20') befindet und zwischen der zusätzlichen Düse (16') und dem Oberteil (13) des zusätzlichen Gehäuses (12') angeordnet ist, wobei die Abstützung (36) dazu ausgelegt ist, eine Patrone (72), die die feste Chemikalie (70) enthält, innerhalb des zusätzlichen Innenraums (20') des zusätzlichen Gehäuses (12') aufzunehmen und zu positionieren; und
optional oder bevorzugt, wobei mindestens ein zusätzliches Wasseraufbereitungsmodul (10') mit einem ersten Wasseraufbereitungsmodul (10) derart in Reihe geschaltet ist, dass der Einlass (21) und die zusätzlichen Einlässe (21') mit einem einzigen Wasserversorgungsrohr (108) verbunden sind und der Auslass (25) und die zusätzlichen Auslässe (25') mit demselben Rücklaufrohr (109) verbunden sind.

9. Vorrichtung (10) nach Anspruch 1, ferner umfassend eine Wasserversorgungsleitung (22) und eine Wasserrücklaufleitung (23), wobei die Wasserversorgungsleitung (22) und die Wasserrücklaufleitung (23) eine Bypass-Leitung einer Hauptdurchflussleitung (100) bilden, wobei die Wasserversorgungsleitung (22) dazu positioniert ist, Wasser an einer Stelle des Durchflusses mit einem ersten Druck zu entnehmen, und die Wasserrücklaufleitung (23) dazu positioniert ist, behandeltes Wasser an einer Stelle in der Hauptdurchflussleitung (100) mit einem zweiten Druck zurückzuführen, der niedriger als der erste Druck ist; und/oder
wobei das poröse Gitter (66) eine erste Oberfläche (65) und eine gegenüberliegende zweite Oberfläche (67) aufweist, wobei die erste Oberfläche (65) eine Mehrzahl von Vorsprüngen (69) umfasst, die sich nach oben und weg von der ersten Oberfläche (65) und in Richtung der inneren Kammer (65) der Patrone (72) erstrecken, und die zweite Oberfläche (67) des porösen Gitters (66) von der inneren Kammer (64) der herausnehmbaren Patrone (72) weg weist.

10. Vorrichtung (10) zum Bilden einer Wasserlösung einer Chemikalie aus einer festen Chemikalie (70), wobei die Vorrichtung (10) umfasst:
(i) ein Gehäuse (12) mit einem Oberteil (13), einer Seite (15) und einem Unterteil (17), wobei das Oberteil (12) und das Unterteil (17) durch die Seite (15) miteinander verbunden sind, das Oberteil (13), die Seite (15) und das Unterteil (17) einen Innenraum (20) bilden und das Gehäuse (12) einen oberen Abschnitt (19) und einen unteren Abschnitt (18) aufweist;
(ii) einen Einlass (21), der sich in dem unteren Abschnitt (18) des Gehäuses (12) befindet, wobei der Einlass (21) ermöglicht, dass Wasser, das mit der festen Chemikalie (70) in Kontakt kommen soll, in das Gehäuse (12) eintritt;
(iii) einen Auslass (25), der sich im oberen Abschnitt (19) des Gehäuses (12) befindet, wobei der Auslass (25) dem mit der festen Chemikalie (70) in Kontakt gebrachten Wasser ermöglicht, aus dem Gehäuse (12) auszutreten;
(iv) eine Düse (16), die innerhalb des Innenraums (20) angeordnet ist, wobei die Düse (16) mit dem Wassereinlass (21) verbunden ist und sich die Düse (16) in dem Innenraum (20) des Gehäuses (12) in dem unteren Abschnitt (18) des Gehäuses (12) befindet, wobei die Düse (16) ermöglicht, dass das durch den Einlass (21) in das Gehäuse (12) eintretende Wasser mit der festen Chemikalie (70) in Kontakt kommt; und
(v) mindestens eine Abstützung (36), die sich innerhalb des Innenraums (20) befindet und zwischen der Düse (16) und dem Oberteil (13) des Gehäuses (12) angeordnet ist, wobei die Abstützung (36) dazu ausgelegt ist, eine Patrone (72), die die feste Chemikalie (70) enthält, innerhalb des Innenraums (20) des Gehäuses (12) aufzunehmen und zu positionieren;
wobei das Oberteil (13) des Gehäuses (12) eine Öffnung (50) umfasst, die es ermöglicht, eine Patrone (72), die die feste Chemikalie (70) enthält, in das Gehäuse (12) einzuführen, und die Vorrichtung ferner eine Kappe (52) aufweist, wobei die Kappe (52) dazu ausgelegt ist, die Öffnung (50) des Gehäuses (12) abzudecken und eine wasserdichte Verbindung mit dem Oberteil (13) des Gehäuses (12) zu bilden;
wobei die Vorrichtung **dadurch gekennzeichnet ist, dass** die
Vorrichtung (10) ferner eine herausnehmbare Patrone (72) umfasst, die die feste Chemikalie (70) enthält, wobei die Patrone (72) ein erstes Ende (61), ein zweites Ende (62) und eine Seitenwand (63), die das erste Ende (61) mit dem zweiten Ende (62) verbindet, aufweist, wobei das erste Ende (61), das zweite Ende (62) und die Seitenwand (63) eine innere Kammer (64) bilden, wobei die innere Kammer (64) die feste Chemikalie (70) enthält und die Patrone (72) so ausgelegt ist, dass sie in den Innenraum (20) des Gehäuses (12) zwischen dem Oberteil (13) des Gehäuses (12) und der Düse (16) passt, wobei die Patrone (72) mit der mindestens einen Abstützung (36) in Kontakt kommt, die sich in dem Innenraum (20) des Gehäuses (12) befindet, und die mindestens eine Abstützung (36) die Patrone (72), die die feste Chemikalie (70) enthält, innerhalb des Innenraums (20) des Gehäuses (12) derart positioniert, dass die Patrone (72) durch die Öffnung (50) in dem Gehäuse (12) in den Innenraum (20) eingesetzt werden kann; und
wobei die Abstützung (36) ein poröses Gitter (66) umfasst, wobei das poröse Gitter (66) eine erste Oberfläche (65) und eine gegenüberliegende zweite Oberfläche (67) aufweist, wobei die erste Oberfläche (65) eine Mehrzahl von Vorsprüngen (69) umfasst, die sich nach oben und weg von der ersten Oberfläche (65) erstrecken.

11. Verfahren zum Erzeugen einer chemischen Lösung aus einer festen Chemikalie (70) unter Verwendung von Wasser, umfassend das Platzieren der Vorrichtung (10) nach Anspruch 1 oder 10 an einer Bypass-Leitung (108) von einer Haupt-Wasserdurchflussleitung (100), und das Durchfließen von dem Hauptwasserdurchfluss (100) durch die Bypass-Leitung (109), und das Zurückführen der chemischen Lösung zu der Haupt-Wasserdurchflussleitung (100).

## Revendications

1. Appareil (10) pour former une solution aqueuse d'un produit chimique à partir d'un produit chimique solide (70), l'appareil comprenant :
(i) un boîtier (12), ayant un sommet (13), un côté (15) et un fond (17), le sommet (12) et le fond (17) étant reliés l'un à l'autre par le côté (15), ledit sommet (13), ledit côté (15) et ledit fond (17) formant un compartiment intérieur (20), et le boîtier (12) ayant une partie supérieure (19) et une partie inférieure (18) ;
(ii) une entrée (21) située dans la partie inférieure (18) du boîtier (12), l'entrée (21) permettant à de l'eau destinée à être mise en contact avec le produit chimique solide (70) d'entrer dans le boîtier (12) ;
(iii) une sortie (25) située dans la partie supérieure (19) du boîtier (12), la sortie (25) permettant à l'eau mise en contact avec le produit chimique solide (70) de sortir du boîtier (12) ;
(iv) une buse (16) disposée dans le compartiment intérieur (20), ladite buse (16) étant reliée à l'entrée d'eau (21) et ladite buse (16) étant située dans le compartiment intérieur (20) du boîtier (12) dans la partie inférieure (18) du boîtier (12), la buse (16) permettant à de l'eau entrant dans le boîtier (12) par l'entrée (21) d'entrer en contact avec le produit chimique solide (70) ; et
(v) au moins un support (36) situé dans le compartiment intérieur (20) positionné entre la buse (16) et le sommet (13) du boîtier (12), ledit support (36) étant apte à recevoir et positionner une cartouche (72) contenant le produit chimique solide (70) dans le compartiment intérieur (20) du boîtier (12) ;
le sommet (13) du boîtier (12) comprenant une ouverture (50) qui permet à une cartouche (72) contenant le produit chimique solide (70) d'être introduite dans le boîtier (12), et l'appareil comprenant en outre un bouchon (52), ledit bouchon (52) étant apte à recouvrir l'ouverture (50) du boîtier (12) et à former un liaison étanche à l'eau avec le sommet (13) du boîtier (12) ;
l'appareil étant **caractérisé par le fait que** :
l'appareil (10) comprend en outre une cartouche amovible (72) contenant le produit chimique solide (70), ladite cartouche (72) ayant une première extrémité (61), une seconde extrémité (62), et une paroi latérale (63) reliant la première extrémité (61) à la seconde extrémité (62), la première extrémité (61), la seconde extrémité (62) et la paroi latérale (63) formant une chambre interne (64), ladite chambre interne (64) contenant le produit chimique solide (70), et la cartouche (72) étant conçue pour rentrer dans le compartiment intérieur (20) du boîtier (12) entre le sommet (13) du boîtier (12) et la buse (16), la cartouche (72) étant en contact avec l'au moins un support (36) situé dans le compartiment intérieur (20) du boîtier (12) et l'au moins un support (36) positionnant la cartouche (72) contenant le produit chimique solide (70) dans le compartiment intérieur (20) du boîtier (12), et de telle sorte que la cartouche (72) peut être introduite dans le compartiment intérieur (20) par ladite ouverture (50) dans le boîtier (12) ; et
la première extrémité (61) de la cartouche comprenant une grille poreuse (66) et, lorsque la cartouche (72) est positionnée dans le compartiment intérieur (20) du boîtier (12), la cartouche (72) étant introduite dans le boîtier (12) de telle sorte que la première extrémité (61) est positionnée près de la buse (16) et la seconde extrémité (62) est positionnée près du sommet (13) du boîtier (12).

2. Appareil (10) selon la revendication 1, dans lequel le bouchon (52) est apte à être retiré du boîtier (12) pour révéler l'ouverture (50) et pour permettre à la cartouche amovible (72) contenant le produit chimique solide (70) d'être introduite dans le compartiment intérieur (20) du boîtier (12) ; et/ou
dans lequel la buse (16) comprend un éjecteur (16') ; et, facultativement ou de préférence, l'éjecteur (16') étant positionné dans le boîtier (12) de telle sorte qu'il y a un écoulement de l'eau dans le boîtier (12) vers le sommet (13) du boîtier (12) à partir de l'éjecteur (16'), et encore facultativement ou de préférence, l'éjecteur (16') comprenant au moins un orifice d'admission de fluide (42) qui crée un effet venturi et permet à de l'eau dans la partie inférieure (18) du boîtier (12) d'être aspirée dans l'éjecteur (16'), avec l'eau entrant dans l'éjecteur (16') par l'entrée (21) pour être pulvérisée vers le sommet (13) du boîtier (12).

3. Appareil (10) selon la revendication 1, dans lequel la grille poreuse (66) a une première surface (65) et une seconde surface opposée (67), la première surface (65) comprenant une pluralité de saillies (69), s'étendant vers l'extérieur et à l'opposé de la première surface (65) et vers la chambre interne (64) de la cartouche (72), et la seconde surface (67) de la grille poreuse (66) étant orientée à l'opposé de la chambre interne (64) de la cartouche amovible (72) ; et, facultativement ou de préférence,
la pluralité de saillies (69) s'étendant dans une direction généralement perpendiculaire par rapport à la première surface (65), et facultativement ou de préférence, la pluralité de saillies (69) ayant une première extrémité (81) et une seconde extrémité (83), la première extrémité (81) des saillies (69) étant située à la première surface (65) de la grille poreuse (66) et la seconde extrémité (67) des saillies (69) étant opposée à la première extrémité (81) des saillies (69), la seconde extrémité (67) des saillies (69) comprenant une extrémité effilée.

4. Appareil (10) selon la revendication 1, dans lequel l'au moins un support (36) comprend une série de supports, qui permettent à une cartouche (72) placée dans le compartiment intérieur (20) du boîtier (12) d'être positionnée à différents niveaux,
la série de supports (36) comprenant une série de gradins situés sur chaque côté (15) du compartiment interne (20), chaque support (36) ayant un support complémentaire dans le compartiment intérieur (20) sur le côté opposé (15) du compartiment intérieur (20).

5. Appareil (10) selon la revendication 1, dans lequel la cartouche (172) a deux parties comprenant une partie supérieure (180) et une partie inférieure (182), la partie supérieure (180) et la partie inférieure (182) étant reliées ensemble de manière réglable avec un moyen de liaison.

6. Appareil (10) selon la revendication 5, dans lequel le moyen de liaison comprend un ergot (185) et un cran (186), l'une de la partie supérieure (180) ou de la partie inférieure (182) ayant au moins un ergot (185), et la partie sans l'ergot ayant au moins un cran (186), et le cran (186) d'une partie étant apte à recevoir l'ergot (185) de l'autre partie, l'ergot (185) et le cran (186) reliant la partie supérieure (180) à la partie inférieure (182) pour former la cartouche.

7. Appareil (10) selon la revendication 6, dans lequel
la partie supérieure (180) a une première extrémité (190), une seconde extrémité (191) et un côté (192) reliant la première extrémité (190) de la partie supérieure (180) à la seconde extrémité (191) de la partie supérieure (180), la première extrémité (190) de la partie supérieure (180) ayant une ouverture (193), et le côté (192) de la partie supérieure (180) a l'ergot (185), et la partie inférieure (182) a une première extrémité (196), une seconde extrémité (197) et un côté (198) reliant la première extrémité (196) de la partie inférieure (182) à la seconde extrémité (197) de la partie inférieure (182), la seconde extrémité (197) de la partie inférieure (182) ayant une ouverture (199), le côté (198) de la partie inférieure (182) ayant l'au moins un cran (186), le cran (186) étant apte à recevoir l'ergot (185) de la partie supérieure (180) de telle sorte que la première partie supérieure (180) et la seconde partie inférieure (182) sont reliées par l'intermédiaire de l'ergot (185) et du cran (186), et facultativement ou de préférence,
la seconde extrémité (197) de la partie inférieure (182) étant dimensionnée et formée pour rentrer dans l'ouverture (193) de la première extrémité (190) de la partie supérieure (180) de telle sorte qu'une surface extérieure (195) du côté (198) de la partie inférieure (182) entre en contact avec une surface intérieure (194) du côté (192) de la partie supérieure (180), et il y a au moins deux ergots (183) sur la surface intérieure (194) du côté (192) de la partie supérieure (182) et il y a une pluralité de crans (186) situés dans la surface extérieure (195) de la partie inférieure (182) ; et encore facultativement ou de préférence, la pluralité de crans (186) étant positionnés le long du côté extérieur (195) de la partie inférieure (182) positionné près de la seconde extrémité (197) de la partie inférieure (182) de telle sorte que les crans (186) permettent à une longueur totale de la cartouche (172) d'être réglée, permettant à la première extrémité (196) de la partie inférieure (182) d'être positionnée plus près ou plus loin de la buse (16) lorsque la cartouche (172) est positionnée dans le compartiment intérieur (20) de l'appareil (10).

8. Appareil (10) selon la revendication 1, comprenant en outre au moins un module supplémentaire (10') pour former une solution aqueuse à partir d'un produit chimique solide (70), chaque module supplémentaire comprenant :
a) un boîtier supplémentaire (12') ayant un sommet (13), un côté (15) et un fond (17), le sommet (12) et le fond (17) étant reliés l'un à l'autre par le côté (15), ledit sommet (13), ledit côté (15) et ledit fond (17) formant un compartiment intérieur supplémentaire (20'), et le boîtier supplémentaire (12') ayant une partie supérieure (19) et une partie inférieure (18) ;
b) une entrée supplémentaire (21') située dans la partie inférieure (18) du boîtier supplémentaire (12'), l'entrée supplémentaire (21') permettant à de l'eau destinée à être mise en contact avec le produit chimique solide (70) d'entrer dans le boîtier supplémentaire (12') ;
c) une sortie supplémentaire (25') située dans la partie supérieure (19) du boîtier supplémentaire (12'), la sortie supplémentaire (25') permettant à l'eau mise en contact avec le produit chimique solide (70) de sortir du boîtier supplémentaire (12') ;
d) une buse supplémentaire (16') disposée dans le compartiment intérieur supplémentaire (20'), ladite buse supplémentaire (16') étant reliée à l'entrée d'eau supplémentaire (21') et ladite buse supplémentaire (16') étant située dans le compartiment intérieur supplémentaire (20') du boîtier supplémentaire (12') dans la partie inférieure (18) du boîtier supplémentaire (12'), la buse supplémentaire (16') permettant à de l'eau entrant dans le boîtier supplémentaire (12') par l'entrée supplémentaire (21') d'entrer en contact avec le produit chimique solide (70) dans le compartiment intérieur supplémentaire (20') ; et
e) au moins un support (36) situé dans le compartiment intérieur supplémentaire (20') positionné entre la buse supplémentaire (16') et le sommet (13) du boîtier supplémentaire (12'), ledit support (36) étant apte à recevoir et positionner une cartouche (72) contenant le produit chimique solide (70) dans le compartiment intérieur supplémentaire (20') du boîtier supplémentaire (12') ; et
facultativement ou de préférence, au moins un module de traitement d'eau supplémentaire (10') étant en série avec un premier module de traitement d'eau (10), de telle sorte que l'entrée (21) et les entrées supplémentaires (21') sont reliées à un unique tuyau d'alimentation en eau (108) et la sortie (25) et les sorties supplémentaires (25') sont reliées au même tuyau de retour (109).

9. Appareil (10) selon la revendication 1, comprenant en outre une conduite d'alimentation en eau (22) et une conduite de retour d'eau (23), la conduite d'alimentation en eau (22) et la conduite de retour d'eau (23) formant une conduite de dérivation d'une conduite principale (100) d'écoulement, la conduite d'alimentation en eau (22) étant positionnée pour retirer de l'eau à un endroit d'écoulement ayant une première pression et la conduite de retour d'eau (23) étant positionnée pour renvoyer de l'eau traitée à un endroit dans la conduite principale (100) d'écoulement ayant une seconde pression qui est inférieure à la première pression ; et/ou
dans lequel la grille poreuse (66) a une première surface (65) et une seconde surface opposée (67), la première surface (65) comprenant une pluralité de saillies (69), s'étendant vers le haut et à l'opposé de la première surface (65) et vers la chambre interne (64) de la cartouche (72), et la seconde surface (67) de la grille poreuse (66) étant orientée à l'opposé de la chambre interne (64) de la cartouche amovible (72).

10. Appareil (10) pour former une solution aqueuse d'un produit chimique à partir d'un produit chimique solide (70), l'appareil (10) comprenant :
(i) un boîtier (12) ayant un sommet (13), un côté (15) et un fond (17), le sommet (12) et le fond (17) étant reliés l'un à l'autre par le côté (15), ledit sommet (13), ledit côté (15) et ledit fond (17) formant un compartiment intérieur (20), et le boîtier (12) ayant une partie supérieure (19) et une partie inférieure (18) ;
(ii) une entrée (21) située dans la partie inférieure (18) du boîtier (12), l'entrée (21) permettant à de l'eau destinée à être mise en contact avec le produit chimique solide (70) d'entrer dans le boîtier (12) ;
(iii) une sortie (25) située dans la partie supérieure (19) du boîtier (12), la sortie (25) permettant à l'eau mise en contact avec le produit chimique solide (70) de sortir du boîtier (12) ;
(iv) une buse (16) disposée dans le compartiment intérieur (20), ladite buse (16) étant reliée à l'entrée d'eau (21) et ladite buse (16) étant située dans le compartiment intérieur (20) du boîtier (12) dans la partie inférieure (18) du boîtier (12), la buse (16) permettant à de l'eau entrant dans le boîtier (12) par l'entrée (21) d'entrer en contact avec le produit chimique solide (70) ; et
(v) au moins un support (36) situé dans le compartiment intérieur (20) positionné entre la buse (16) et le sommet (13) du boîtier (12), ledit support (36) étant conçu pour recevoir et positionner une cartouche (72) contenant le produit chimique solide (70) dans le compartiment intérieur (20) du boîtier (12) ;
le sommet (13) du boîtier (12) comprenant une ouverture (50) qui permet à une cartouche (72) contenant le produit chimique solide (70) d'être introduite dans le logement (12), et l'appareil comprend en outre un bouchon (52), ledit bouchon (52) étant apte à recouvrir l'ouverture (50) du boîtier (12) et à former une liaison étanche à l'eau avec le sommet (13) du boîtier (12) ;
l'appareil étant **caractérisé par le fait que** :
l'appareil (10) comprend en outre une cartouche amovible (72) contenant le produit chimique solide (70), ladite cartouche (72) ayant une première extrémité (61), une seconde extrémité (62), et une paroi latérale (63) reliant la première extrémité (61) à la seconde extrémité (62), la première extrémité (61), la seconde extrémité (62) et la paroi latérale (63) formant une chambre interne (64), ladite chambre interne (64) contenant le produit chimique solide (70), et la cartouche (72) étant conçue pour rentrer dans le compartiment intérieur (20) du boîtier (12) entre le sommet (13) du boîtier (12) et la buse (16), la cartouche (72) étant en contact avec l'au moins un support (36) situé dans le compartiment intérieur (20) du boîtier (12) et l'au moins un support (36) positionnant la cartouche (72) contenant le produit chimique solide (70) dans le compartiment intérieur (20) du logement (12), et de telle sorte que la cartouche (72) peut être introduite dans le compartiment intérieur (20) par une ouverture (50) dans le sommet (13) du boîtier (12) ; et
le support (36) comprenant une grille poreuse (66), la grille poreuse (66) ayant une première surface (65) et une seconde surface opposée (67), la première surface (65) comprenant une pluralité de saillies (69), s'étendant vers le haut et à l'opposé de la première surface (65).

11. Procédé de création d'une solution chimique à partir d'un produit chimique solide (70) en utilisant de l'eau, comprenant placer l'appareil (10) selon la revendication 1 ou 10 sur une conduite de dérivation (108) d'une conduite d'écoulement d'eau principal (100), et faire s'écouler de l'eau à partir de l'écoulement d'eau principal (100) à travers la conduite de dérivation (109), et retourner la solution chimique à la conduite d'écoulement d'eau principal (100).
